# EUROPÄISCHE PATENTSCHRIFT

(11) **EP 0 639 252 B1**
(45) Veröffentlichungstag und Bekanntmachung des Hinweises auf die Patenterteilung: **19.05.1999**
(21) Anmeldenummer: 94908254.9
(22) Anmeldetag: 25.02.1994
(51) Int. Cl.: F16L 55/11

(54) **VERSCHLUSS ZUM VERSCHLIESSEN EINES MEDIENKANALS EINES DRUCKLEITUNGSSYSTEMS FÜR EIN UNTER DRUCK STEHENDES MEDIUM**
CLOSURE FOR CLOSING A PRESSURIZED MEDIUM FLOW CHANNEL IN A PIPE SYSTEM UNDER PRESSURE
FERMETURE D'UN CANAL D'ECOULEMENT D'UN FLUIDE SOUS PRESSION DANS UN SYSTEME DE CANALISATIONS SOUS PRESSION

(30) Priorität: 05.03.1993 DE 4306985; 08.04.1993 DE 4311629
(43) Veröffentlichungstag der Anmeldung: 22.02.1995
(73) Patentinhaber: Riepl, Günther, 93059 Regensburg (DE); Roith, Reiner, D-93183 Kallmünz (DE)
(72) Erfinder: Riepl, Günther, 93059 Regensburg (DE); Roith, Reiner, D-93183 Kallmünz (DE)
(74) Vertreter: Graf, Helmut, Dipl.-Ing.
(86) Internationale Anmeldenummer: DE9400179
(87) Internationale Veröffentlichungsnummer: WO9420782

(56) Entgegenhaltungen:
- EP-A- 0 121 172
- EP-A- 0 163 087
- DE-C- 830 273
- GB-A- 2 078 330
- US-A- 4 178 967

## Beschreibung

Die Erfindung bezieht sich auf einen Verschluß gemäß Oberbegriff Patentanspruch 1.

Es ist bekannt und üblich, Druckrohrleitungen oder Mediumkanäle solcher Leitungen ohne augenblickliche Nutzung mit Verschlüssen, die von Verschlußkappen oder Verschlußstopfen gebildet sind, abzudichten bzw. zu verschließen.

So sind beispielsweise (zur Vorbereitung von Hausanschlüssen) nach der Trinkwasserverordnung und der zugehörigen DIN 1988 ("Trinkwasser-Leitungsanlagen in Grundstücken - Technische Bestimmung für Bau und Betrieb") an eine Hauptversorgungsleitung angeschlossene, in ein Grundstück führende und dort verschlossene Blindanschlüsse nicht zulässig. Es ist daher bisher notwendig, bei einem Neuanschluß die in der Regel unter einer Straße verlegte Hauptversorgungsleitung freizulegen, um dann den Anschluß durchführen zu können. Hierfür sind aufwendige Aufbruch- und Erdarbeiten notwendig, die nach dem heutigen Stand selbst bei Neubaugebieten nicht vermieden werden können, da auch dort der gebäudeseitige Anschluß bzw. Hausanschluß in der Regel erst zeitlich nach dem Verlegen der Hauptversorgungsleitung erfolgt.

Ein Verschluß mit den Merkmalen des Oberbegriffs des Patentanspruches 1 ist bekannt (GB-A- 20 78 330). Der bekannte Verschluß ist in der Konstruktion sehr aufwendig und besteht aus zwei Zylinder-Elementen, die teleskopartig ineinander verschiebbar sind und zwischen sich eine außenliegende Ringdichtung derart einspannen, daß diese bei ineinander geschobenen Zylinderteilen unter elastischer Verformung radial nach außen gegen die Innenfläche der zu verschließenden Rohrleitung angepreßt anliegt. An einem Zylinderteil sind mehrere hebelartige Verschluß- oder Verriegelungselemente schwenkbar gehalten, die bei geschlossenem Verschluß Rasten an der Innenfläche des zu verschließenden Mediumkanals hintergreifen. Durch einen Abstützring sind die Verriegelungselemente in ihrer verriegelnden Stellung gehalten. Durch Ziehen an dem Abstützring werden die Verriegelungselemente freigegeben, so daß sich die beiden Zylinderteile des Verschlußes unter Entspannung der Ringdichtung axial verschieben können und der Verschluß freigegeben wird.

Aufgabe der Erfindung ist es, einen Verschluß aufzuzeigen, der ein dauerhaftes Verschließen eines Mediumkanals eines Druckleitungssystems, insbesondere eines Wasserversorgungssystems an einem hierfür vorgesehenen Verschließbereich ermöglicht und im Bedarfsfalle von einer von diesem Verschließbereich entfernt liegenden Stellen aus geöffnet werden kann, ohne daß hierfür der Verschließbereich zugänglich sein muß, und zwar trotz einer im Vergleich zu dem gattungsbildenden Verschluß vereinfachten Konstruktion.

Zur Lösung dieser Aufgabe ist ein Verschluß entsprechend den Merkmalen Anspruches 1 ausgeführt.

Der erfindugnsgemäße Verschluß erfüllt insbesondere auch die Forderungen der Trinkwasserverordnung und ist somit in besonders vorteilhafter Weise in Druckleitungssystemen für die Trinkwasserversorgung dort einsetzbar, wo an einer Hauptversorgungsleitung zu einem späteren Zeitpunkt Hausanschluß erfolgen soll.

Der Medienkanal, in den der erfindungsgemäße Verschluß eingebaut ist, ist beispielsweise der Kanal einer Anbohrarmatur oder der Kanal einer Anschlußverschraubung. Der Verschluß trennt im eingebauten Zustand den wasserführenden Teil bzw. die Druckseite des Medienkanals von dem Wasser nicht führenden Teil bzw. von der drucklosen Seite dieses Medienkanals, wobei diese drucklose Seite von einem Rohrstück gebildet ist, welches bis an einem Bereich führt, der vom Verschließbereich räumlich entfernt ist, außerhalb der Straße liegt und ohne Probleme zugänglich ist oder gemacht werden kann.

Bevorzugt wird der erfindungsgemäße Verschluß so eingesetzt, daß er direkt nach dem Anschlußpunkt für den Hausanschluß (Hausanschlußschieber) gesetzt und das den Hausanschluß bildende Medienrohr (z. B. Kunststoffdruckrohr) in der später notwendigen Länge verlegt wird. Ohne daß der Hausanschluß in Betrieb genommen wird, kann die Dichtigkeit des Anschlußpunktes (Hausanschlußschieber) mit der Hauptleitung überprüft werden.

Wird zu einem späteren Zeitpunkt der Hausanschluß benötigt, so wird das Ende des den Hausanschluß bildenden Medienrohres außerhalb der Straße freigelegt, ein das Medienrohr verschließender Verschlußdeckel entfernt und mit Hilfe der bis an dieses Ende reichenden und am Verbindungsstück des Verschlusses befestigten Zugeinrichtung das Verriegelungsstück bzw. Verbindungsstück relativ zu den übrigen Teilen des Verschlusses derart bewegt, daß dieser unter dem Wasserdruck durch Kollabieren öffnet. Das Verriegelungsstück bzw. Verbindungsstück wird aus dem den Hausanschluß bildenden Medienrohr herausgezogen. Die übrigen Teile des Verschlusses werden mit dem das Medienrohr durchströmenden Wasser ausgeschwemmt.

Weiterbildungen der Erfindung sind Gegenstand der Unteransprüche. Die Erfindung wird im Folgenden anhand der Figuren an Ausführungsbeispielen näher erläutert. Es zeigen:
- Fig. 1: in schematischer Darstellung einen in einem Medienkanal eines Leitungssystem angeordneten Verschluß gemäß der Erfindung;
- Fig. 2: eine Stirnansicht des Verschlusses bzw. eine Ansicht auf die Druckseite eines scheibenförmige Verschlußelementes, in Blickrichtung des Pfeiles A der Fig.1;
- Fig. 3: in perspektivischer Explosionsdarstellung die Elemente des Verschlusses nach Fig. 1;
- Fig. 4 - 7: in einer ähnlichen Darstellung wie Fig. 1 zur Erläuterung der Wirkungsweise den Verschluß in verschiedenen Zuständen beim Öffnen eines geschlossenen Verschließbereichs;
- Fig. 8: in ähnlicher Darstellung wie Fig. 1, jedoch bei in einer Anschlußverschraubung integriertem Verschluß;
- Fig. 9: in schematischer Darstellung und im Schnitt verschiedene mögliche Einbaubeispiele des Verschlusses, nämlich in einer an einem Schiebergehäuse vorgesehenen Anschlußverschraubung oder am Schiebergehäuse;
- Fig. 10: in vergrößerter Teildarstellung und im Schnitt eine weitere, bevorzugte Ausführungsform des erfindungsgemäßen Verschlusses;
- Fig. 11: eine Draufsicht auf das scheibenförmige Verschlußelement des Verschlusses der Fig. 10 im Blickrichtung des Pfeiles B;
- Fig. 12 - 14: im Teilschnitt und in Darstellung wie die Figuren 6 und 7 weitere, mögliche Ausführungsformen.

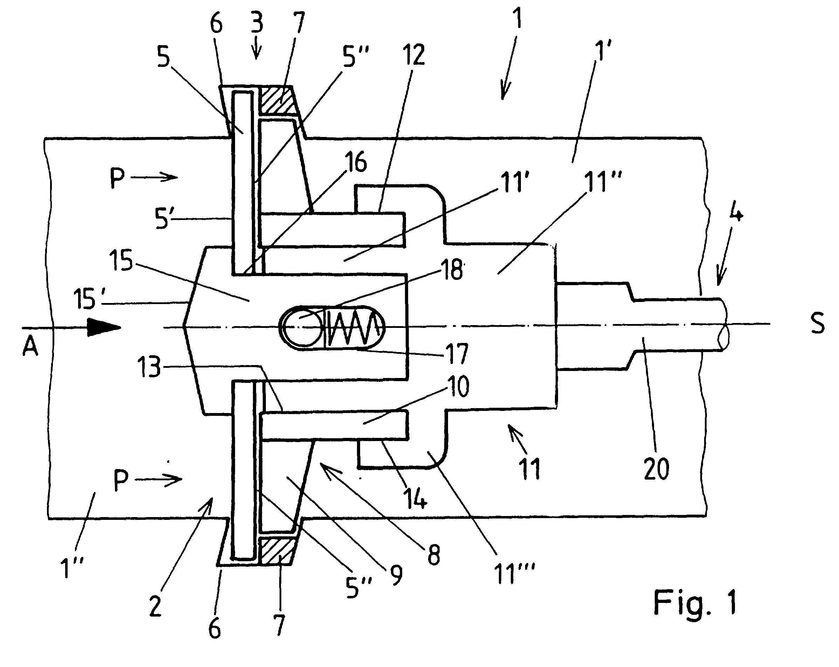

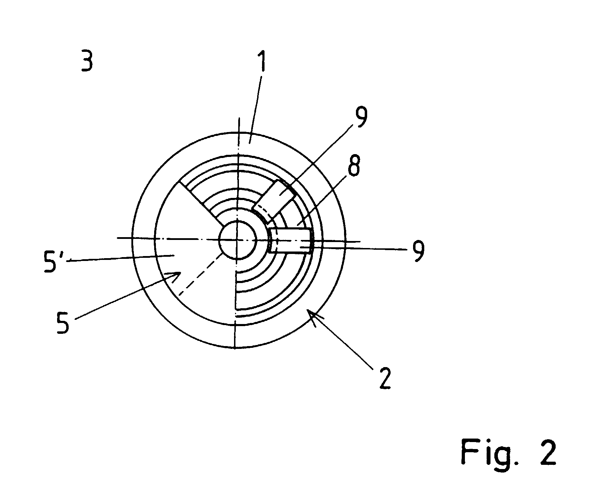

In den Figuren 1 - 6 ist mit 1 allgemein ein in einem Leitungssystem für die Trinkwasserversorgung gebildeter Medienkanal 1 bezeichnet, und zwar im Bereich eines diesen Medienkanal verschließenden Verschlusses 2, d.h. in einem Verschließbereich 3. Der Medienkanal 1 kann, wie auch die nachfolgende Beschreibung zeigt, in der unterschiedlichsten Weise realisiert sein.

Der Verschluß 2 ist so ausgebildet, daß er den in der Fig. 1 rechten, kein Trinkwasser führenden und drucklosen Teil 1' des Medienkanales 1 gegen den in der Fig. 1 linken, Trinkwasser führenden und den Medien- bzw. Wasserdruck aufweisenden Teil 1" des Medienkanales abdichtet, und zwar insbesondere auch gegenüber dem im Teil 1" herrschenden Mediendruck, der mit den Pfeilen P angedeutet ist.

Der Verschluß 2 ist weiterhin so ausgebildet, daß er an einem von dem Verschließbereich 3 räumlich entfernten Ort aus durch ein im Teil 1' des Medienkanals 1 verlaufendes Zugelement 4 geöffnet werden kann, und zwar beispielsweise zum Herstellen der Verbindung eines Hausanschlusses mit der Versorgungsleitung eines Trinkwasser-Versorgungsnetzes.

Im einzelnen besteht der Verschluß 2 aus einem kreisscheibenförmigen Verschlußelement 5, welches mit einem Umfang in eine in der Wandung des Medienkanals 1 gebildete ringnutartige Erweiterung 6 hineinreicht und sich dort mit der dem Teil 1" abgewandten Umfangsseite am Rand gegen eine in der Erweiterung 6 ebenfalls vorgesehene und die Achse des Medienkanals 1 konzentrisch umschließende Ringdichtung 7 abstützt.

Der Verschluß 2 besteht weiterhin aus mehreren Tragstücken bzw. Abstützelementen 8, die jeweils im wesentlichen winkelartig ausgebildet sind und ein erstes, schenkelartiges Segment 9 sowie ein zweites Segment 10 aufweist. Jedes Abstützelement 8 ist mit seinen beiden Segmenten 9 und 10 beispielsweise als Gußteil aus Kunststoff oder Metall oder einem anderen geeigneten Material einstückig hergestellt. Jedes Segment 10 bildet einen Teil eines kreisförmigen Hohlzylinders und ist so angeordnet, daß es mit seiner konkaven Seite der achsgleich mit der Achse des Medienkanales 1 liegenden Längs- bzw. Symmetrieachse S des Verschlusses 2 zugewandt ist, die (Symmetrieachse S) auch die Mittelachse des scheibenförmigen Verschlußelementes 5 bildet.

Jedes Segment 9 steht bezogen auf die Achse S radial von dem Segment 10 weg und bildet eine Anlage- und Abstützfläche für die der Vorder- oder Druckseite 5' abgewandte Rückseite 5" des Verschlußelementes 5. Die Segmente 9 reichen mit ihren radial außenliegenden Enden in die Erweiterung 6 hinein, so daß über diese Enden der Mediendruck P vom Verschluß 2 aufgenommen wird. Das Verschlußelement 5 ist somit nahezu vollständig von einer Druckbeanspruchung durch den Wasserdruck P entlastet.

Der Verschluß 2 umfaßt weiterhin ein Verriegelungs - bzw. Verbindungsstück 11 für die Abstützelemente 8, die dort gleichmäßig um die Achse S verteilt vorgesehen sind. Das Verbindungsstück 11, welches bei der dargestellten Ausführungsform rotationssymmetrisch zur Achse S ausgeführt ist, besitzt in Querschnittsebenen senkrecht zu dieser Symmetrieachse S einen maximalen Querschnitt, der wesentlich kleiner ist als der Innenquerschnitt des Medienkanales 1. Im wesentlichen ist das Verbindungsstück 11, welches ebenfalls als Form- oder Gußteil aus einem geeigneten Material, beispielsweise aus Kunststoff oder Metall gefertigt ist, einstückig mit einem hülsenartigen Abschnitt 11', der mit seiner offenen Stirnseite bis an die Rückseite 5" des Verschlußelementes 5 reicht, aus einem sich an dem anderen Ende des Abschnittes 11' anschließenden, massiv ausgebildeten zylinderförmigen Abschnitt 11" sowie aus einem flanschförmigen Abschnitt 11''' hergestellt. Letzterer am Übergang zwischen den Abschnitten 11' und 11" ist etwa in der Mitte des Verbindungsstückes gebildet, steht radial über die Abschnitte 11' und 11" weg und ist an seiner dem Abschnitt 11" abgewandten Seite mit einer von einer Ringnut 12 gebildeten Ausnehmung versehen ist, die in axialer Richtung, d.h. in Richtung zum Verschlußelement 5 hin offen ist. In diese Ringnut 12 reichen die Segmente 10 sämtliche Tragstücke bzw. Abstützelemente 8 mit ihren dem jeweiligen Segment 9 entfernt liegenden Ende hinein. Das Verriegelungs - bzw. Verbindungsstück 11 bildet somit für jedes Abstützelement 8 bzw. für das dortige Segment 10 mit der Außenfläche des Abschnittes 11' eine erste Abstützfläche für die dem jeweiligen Segment 9 abgewandte Innenfläche des Segmentes 10, und zwar insbesondere an dem dem Verschlußelement 5 benachbarten Bereich, sowie mit der radial außenliegenden, die Achse S umschließenden Begrenzungsfläche der Ringnut 12 eine zweite Abstützfläche 14 für die der Achse S abgewandten Außenfläche des Segmentes 10. Durch die beiden Anlage- oder Abstützflächen 13 und 14 werden trotz der lösbaren Verbindung der Abstützelemente 8 und des gemeinsamen Verbindungsstückes 11 sämtliche aus dem Wasserdruck P resultierenden und an den Segmenten wirksamen Kräfte und Momente auf das Verbindungsstück 11 übertragen, und zwar an den Anlageflächen 13 im wesentlichen in Form von radial nach innen wirkenden Kräften und an den Anlageflächen 14 im wesentlichen in Form von radial nach außen wirkenden Kräften, wobei durch die Verteilung mehrerer Abstützelemente 8 sich die von diesen Abstützelementen auf das Verbindungsstück 11 übertragenen Kräfte und Momente gegenseitig kompensieren.

Im hülsenartigen Abschnitt 11' sitzt ein Bolzen 15, der mit seiner Achse achsgleich mit der Symmetrieachse S angeordnet ist, das Verschlußelement 5 im Bereich einer mittigen Öffnung 16 durchdringt und mit einem Bolzenkopf 15' gegen die Vorderseite 5' des Verschlußelementes 5 anliegt. Durch nicht näher dargestellte Dichtungsmittel ist sichergestellt, daß der Bolzen 15 das Verschlußelement 5 dicht durchdringt. Durch ein im Bolzen 15 vorgesehenes Langloch 17, in welches ein Sicherungssplint 18 eingreift, der beidendig in dem hülsenartigen Abschnitt 11' gehalten ist, ist eine relative Bewegung zwischen dem Verbindungsstück 11 und dem Bolzen 15 um einen vorgegebenen Betrag möglich. Durch eine im Bolzen 15 vorgesehene und auf den Sicherungssplint 18 einwirkende Druckfeder 19 ist der Bolzen 15 so vorgespannt, daß er mit seinem Kopf 15' federnd gegen die Vorderseite 5' des Verschlußelementes 5 anliegt und somit auch der Verschluß 2 bzw. dessen Teile insbesondere vor dem Einbau in den Medienkanal 1 zusammengehalten sind.

Von dem dem Verschlußelement 5 abgewandten Ende des Verbindungsstückes 11 erstreckt sich ein stangenartiger Ansatz 20 weg, der achsgleich mit der Achse S angeordnet ist. Dieser Ansatz 20 bildet einen Teil des Zugelementes 4 und weist an seinem Ende eine Öse 21 auf, an der ein Ende eines Zugseiles 22 befestigt ist, welches in dem Teil 1' des Medienkanales 1 bis an einen geeigneten, dem Verschließbereich 3 entfernt liegenden Ort verlegt ist.

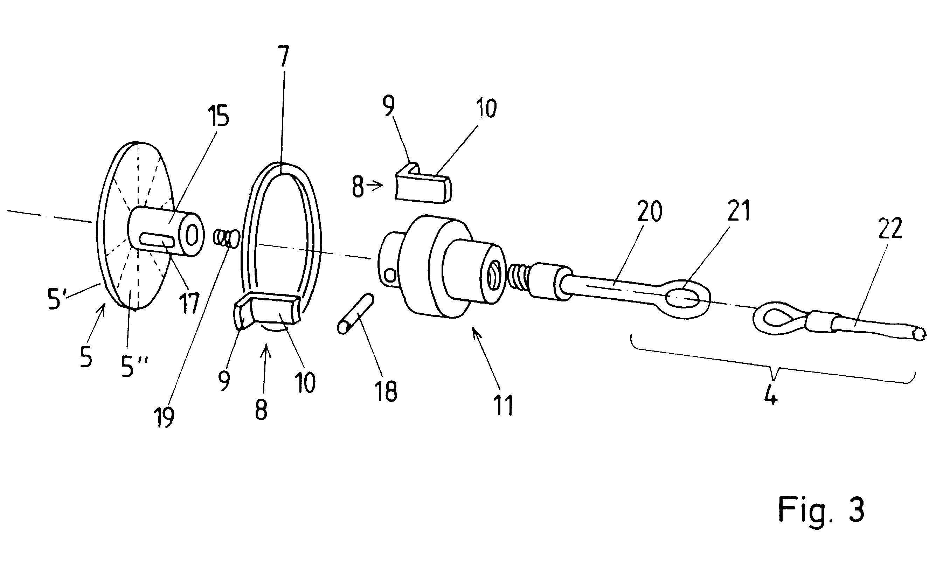

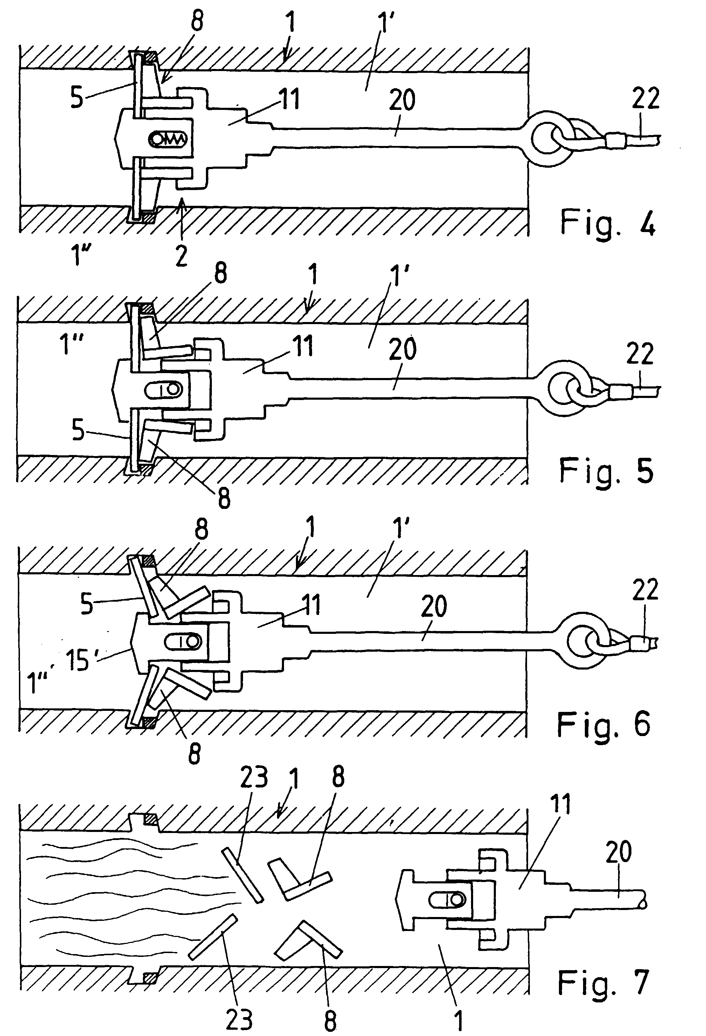

In dem insbesondere in den Figuren 1 und 3 dargestellten Zustand ist der Medienkanal 1 im Bereich 3 dauerhaft verschlossen. Soll der Medienkanal 1 geöffnet werden, so wird durch Ziehen an dem Zugseil 22 das Verriegelungs - bzw. Verbindungsstück 11 in Achsrichtung des Medienkanales 1 bewegt, wobei schließlich, wie in der Fig. 5 dargestellt ist, die an ihren radial außenliegenden Enden in der Erweiterung 6 gehaltenen Tragstücke oder Abstützelemente 8 bzw. deren Segmente 10 außer Eingriff mit der Ringnut 12 kommen. Hierdurch geht die gegenseitige Abstützung der Abstützelemente 8 an dem Verbindungsstück 11 verloren, so daß die Abstützelemente 8 eine Abstützung des Verschlußelementes 5 nicht mehr bewirken können und dieses durch den Wasserdruck zunehmend eingedrückt wird (Fig. 6). Das Verschlußelement 5 zerbricht schließlich entsprechend der Fig. 7 in einzelne Teile 23, die zusammen mit den losen Abstützelementen 8 durch das in den Teil 1' strömende Wasser ausgespült werden. Das Verbindungsstück 11 und der Bolzen 15 werden mit dem Zugseil 22 aus dem Medienkanal 1 entfernt.

Der beschriebene Verschluß 2 hat somit den Vorteil, daß in einem Leitungssystem für Trinkwasser Anschlußleitungen bzw. Anschlüsse zum späteren Anschließen von Hausanschlüssen vorbereitet werden können, diese Anschlüsse (auch unter Vermeidung von Blindleitungen) in einer der Trinkwasser-Verordnung entsprechenden Weise dauerhaft solange verschlossen sind , bis der Neuanschluß des betreffenden Gebäudes erfolgt. Das Öffnen dieses Verschlusses kann insbesondere von einer räumlich entfernten Stelle erfolgen, so daß auch ein Öffnen beispielsweise einer Straße oder Fahrbahn, unter der die Versorgungsleitung verlegt ist, nicht erforderlich ist.

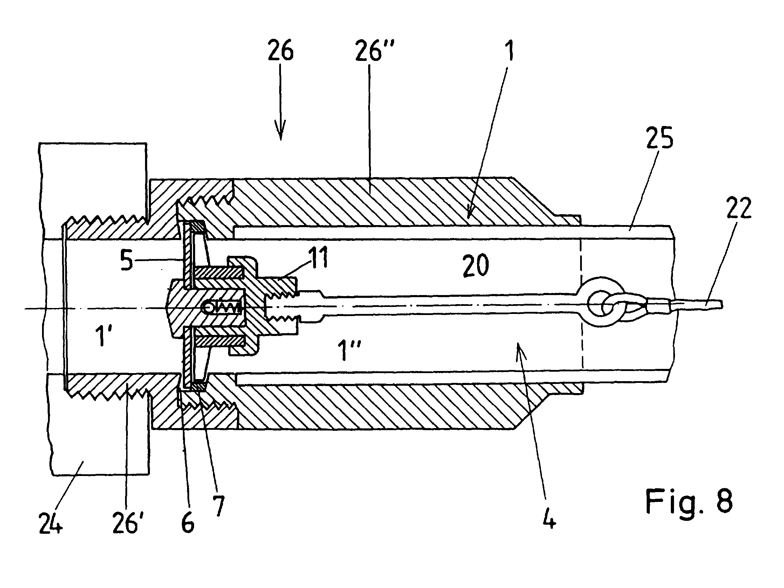

Fig. 8 zeigt die Anordnung des Verschlusses 2 in einer Anschlußverschraubung 26 zwischen einem Gehäuse 24, welches beispielsweise das Gehäuse eines Schiebers ist und einem Kunststoffdruckrohr 25. Die Verschraubung 26 besteht aus zwei hülsenartigen Teilen 26' und 26", von denen das Teil 26' in das Gehäuse 24 eingeschraubt ist und das Teil 26" auf dem Kunststoffdruckrohr 25 gehalten ist. Beide Teile 26' und 26" sind durch Gewinde miteinander verbunden. An dem in das Teil 26' eingeschraubten Ende besitzt das Teil 26" innen eine Erweiterung, die bei miteinander verbundenen Teilen 26' und 26" die Erweiterung 6 mit der Ringdichtung 7 bildet.

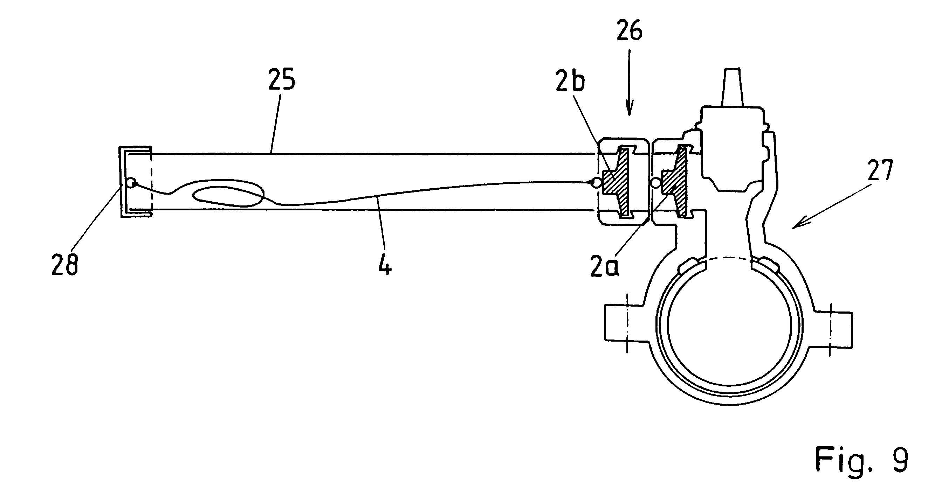

Die Fig. 9 zeigt in schematischer Darstellung verschiedene Einbaumöglichkeiten für den Verschluß 2, und zwar mit 2a den Einbau dieses Verschlusses direkt in einen Schieber 28 bzw. in den Auslaß bzw. Auslaßkanal dieses Schiebers und mit 2b den Einbau des Verschlusses in die mit dem Schieber 27 verbundene Anschlußverschraubung 26. In beiden Fällen ist das Zugseil 22 in dem den Teil 1' bildenden Rohrstück bzw. Kunststoffdruckrohr 25 eines vorbereiteten Hausanschlusses bis zu einem vom Schieber 27 entfernt liegenden Ende dieses Rohrstückes 25 verlegt und dort an der Innenseite einer abnehmbaren Verschlußkappe 28 befestigt.

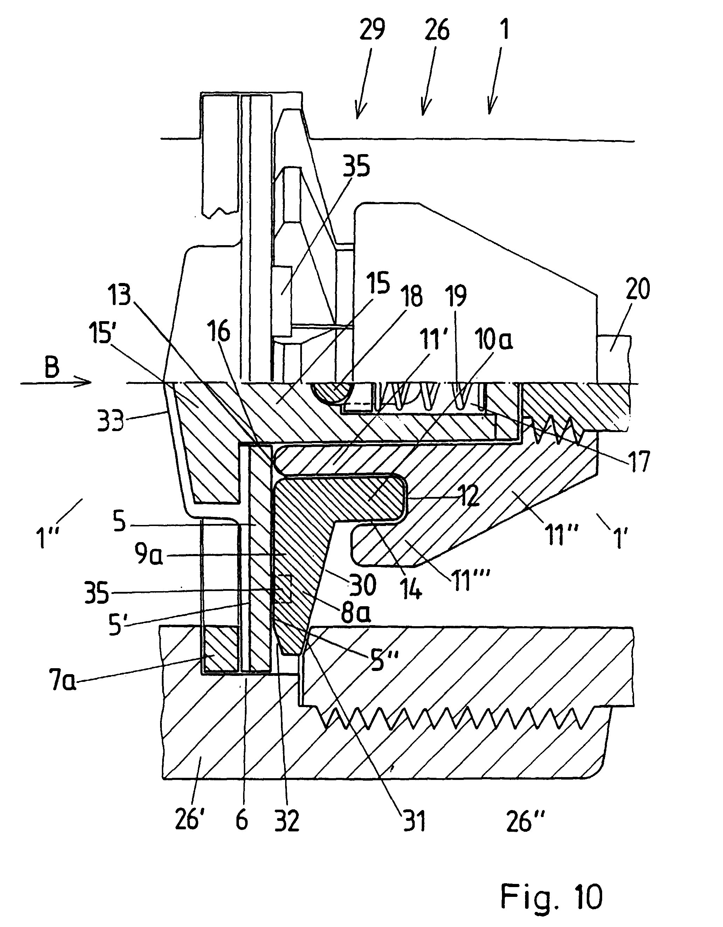

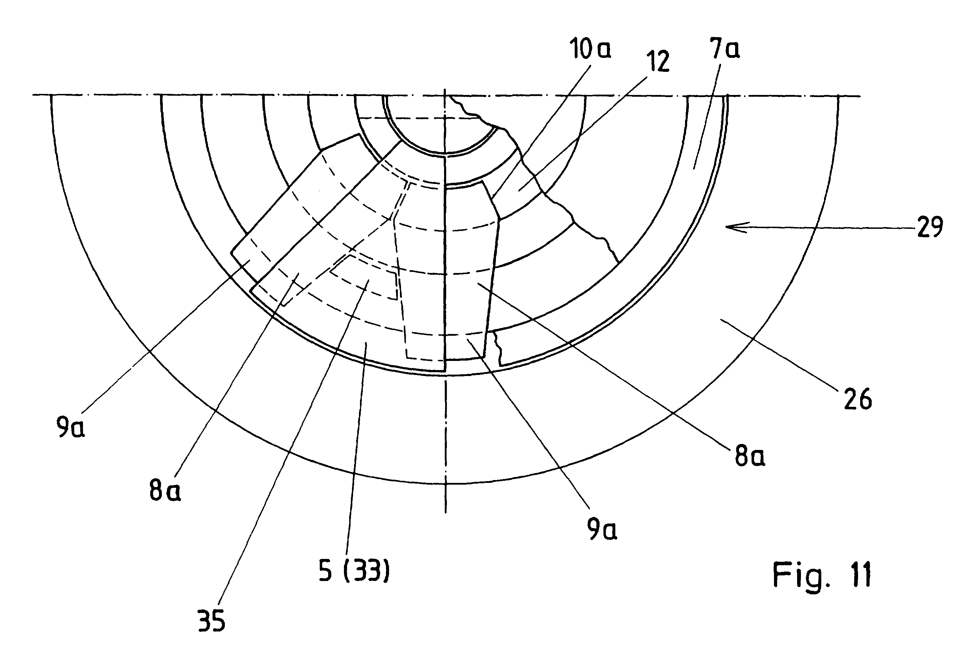

Die Figuren 10 und 11 zeigen als weitere bevorzugte Ausführungsform der Erfindung einen Verschluß 29, der sich von dem vorbeschriebenen Verschluß 2 im wesentlichen nur durch die nachfolgend noch näher beschriebenen Details unterscheidet, ansonsten aber dem Verschluß 2 entspricht, so daß in den Figuren 10 und 11 für solche Elemente, die hinsichtlich ihrer Funktion und Ausbildung den Elementen des Verschlusses 2 entsprechen, wiederum gleiche Bezugsziffern gewählt sind.

Ein Unterschied zum Verschluß 2 besteht darin, daß die den Abstützelementen 8 entsprechenden Tragstücke bzw. Abstützelemente 8a eine etwas andere Formgebung aufweisen, insbesondere die Segmente 9a an ihrer dem Verschlußelement 5 abgewandten Rückseite eine Schrägfläche 30 bilden, die mit der Symmetrieachse S einen sich zum Verschlußelement 5 hin öffnenden Winkel größer als 45° einschließt. Mit diesen Schrägflächen 30 liegen die Abstützelemente 8a im Bereich der Erweiterung 6 an einer schrägen Gegenfläche 31 an.

Weiterhin weisen die Segmente 9a auch an ihrer dem Verschlußelement 5 zugewandten Seite im Bereich der freien Enden eine Abschrägung 32 auf, so daß die freien Enden der Segmente 9a von der Rückseite 5" etwas beabstandet sind. Durch diese Ausbildung der Abstützelemente 9 wird trotz eines hohen, auf die Vorderseite des Verschlußelementes 5 wirkenden Mediend ruckes P ein Lösen der Abstützelemente 8a vom Medienkanal sowie vom Verriegelungs bzw. Verbindungsstück 11 beim Öffnen des Verschlusses wesentlich verbessert.

Bei dem Verschluß 29 befindet sich eine der Ringdichtung 7 entsprechende Ringdichtung 7a an der Druckseite 1". Das Verschlußelement 5 sowie auch der Kopf 15' des Bolzens 15 sind weiterhin an der Druckseite 1" mit einem lamellenartigen Dichtungselement 33 abgedeckt, welches bis an den Rand des Verschlußelementes reicht und aus einem gummiartigen Dichtungsmaterial hergestellt ist. Über die radial außenliegenden Enden der Segmente 9a sind das Verschlußelement 5 sowie die Dichtungen 7a und 33 zwischen den beiden die Anschlußverschraubung 26 bildenden Teilen 26' und 26" verspannt. Auch bei dem Verschluß 29 ist das Verschlußelement 5 wiederum mit Sollbruchstellen ausgeführt.

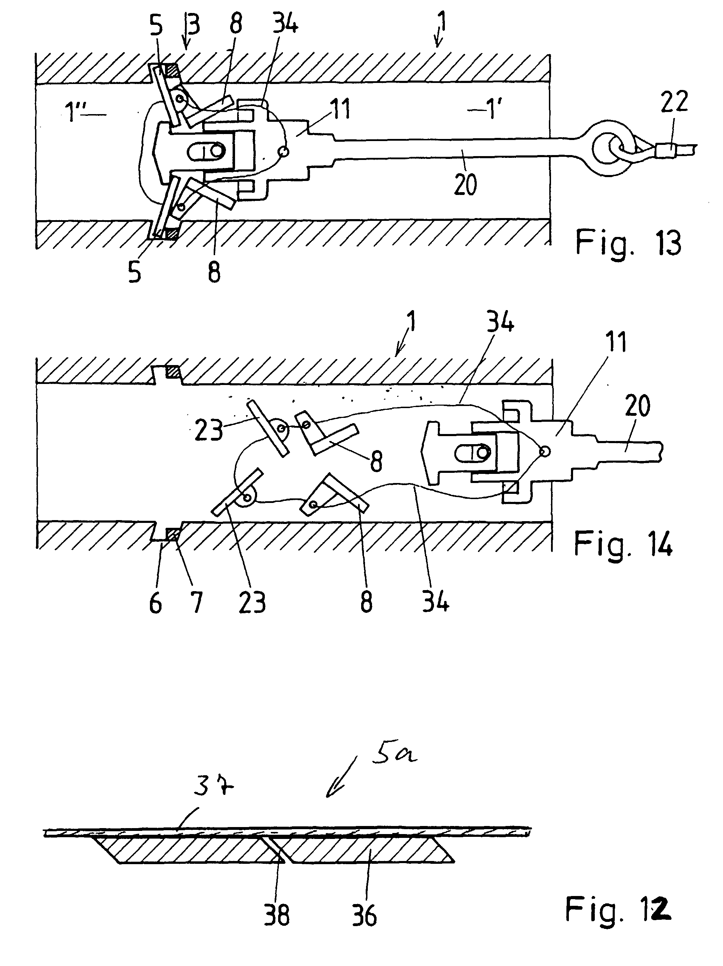

Die Figuren 13 und 14 zeigen eine Ausführungsform, die sich von der Ausführungsform der Figuren 1 - 9 lediglich dadurch unterscheidet, daß ein schnur- oder seilartiges Element 34 vorgesehen ist, welches sämtliche Teile des Verschlusses 2 bzw. 29 mit dem Verbindungsstück 11 verbindet.

Wie oben ausgeführt, ist bei den Verschlüssen 2 und 29 das Verschlußelement 5 mit Sollbruchstellen versehen. Diese verlaufen zumindest teilweise radial zur Achse S und befinden sich dort, wo sich das Verschlußelement an den Segmenten 9 oder 9a abstützt. An der Rückseite 5" weist das Verschlußelement Vorsprünge 35 auf, die in der Figur 10 mit unterbrochenen Linien angedeutet und derart zwischen den Segmenten 9a der Abstützelemente 8a angeordnet sind, daß sich das Verschlußelement 5 relativ zu den Abstützelementen 8a nicht verdrehen kann und somit die richtige Lage aufweist.

Figur 12 zeigt in einem Schnitt entsprechend der Linie I - I einen Schnitt durch ein Verschlußelement 5a, welches anstelle des Verschlußelementes 5 verwendet sein kann. Das Verschlußelement 5a besteht aus mehreren segmentartigen Teilen 36, die an wenigstens einer Seite, nämlich vorzugsweise an der Vorderseite des Verschlußelementes durch eine eine Dichtung bildende Schicht 37 miteinander verbunden sind. Die radial zur Achse S verlaufenden Trennflächen 38, an denen die Teile 36 unmittelbar aneinander anschließen, bilden die Sollbruchstellen. Diese Trennflächen 38 sind gegenüber der Ebene des Verschlußelementes 5a geneigt. Durch diese Neigung bzw. Schräge ist gewährleistet, daß sich beim Öffnen des Verschlusses die einzelenen Teile 36 aneinander nicht verklemmen können, sondern übereinander schieben. Die schrägen Trennflächen oder Sollbruchstellen können auch auf andere Weise, insbesonder auch bei einem einstückigen Verschlußelement realisiert sein.

Vorstehend wurden die Abstützelemente 8 und 8a winkelstückartig beschrieben. Tatsächlich können diese Winkelstücke aber auch zumindest an ihrer Außenfläche teilkegelförmig, d.h. entsprechend der Mantefläche eines Teils eines Kegels ausgeführt sein, so daß in diesem Fall die Abstützelement dann auch als kegelstückartig oder teilkegelstückartig bezeichnet werden können.

### Bezugszeichenliste

- 1: Medienkanal
- 1': drucklose Seite
- 1": Druckseite
- 2a, 2b: Verschluß
- 3: verschlossener Bereich
- 4: Zugelement
- 5: Verschlußelement
- 5': Vorderseite
- 5": Rückseite
- 6: Erweiterung
- 7, 7a: Dichtung
- 8, 8a: Abstützelement bzw. Tragstück
- 9, 9a: Segment
- 10, 10a: Segment
- 11: Verbindungsstück bzw. Verriegelungsstück
- 11', 11", 11''': Abschnitt
- 12: Ringnut
- 13, 14: Abstützfläche
- 15: Bolzen
- 15': Kopf
- 16: Öffnung
- 17: Langloch
- 18: Sicherungssplint
- 19: Feder
- 20: Ansatz
- 21: Hülse
- 22: Zugseil
- 23: Verschließelementteil
- 24: Gehäuse
- 25: Kunstoffdruckrohr
- 26: Anschlußverschraubung
- 26', 26": Teil
- 27: Schieber
- 28: Verschlußkappe
- 29: Verschluß
- 30: Schrägfläche
- 31: Gegenfläche
- 32: Abschrägung
- 33: Dichtung
- 34: seilartiges Element
- 35: Vorsprung
- 36: Teil
- 37: Überzug bzw. Schicht
- 38: Trennfläche

## Patentansprüche

1. Verschluß zum Verschließen eines Mediumkanals eines Druckleitungssystems für ein unter Druck stehendes gasförmiges oder flüssiges Medium an einem Verschlußbereich (3), insbes. zum Verschließen eines Mediumkanals eines Leitungssystems für die Trinkwasserversorgung an dem Verschlußbereich (3), mit einem Abstützelement, welches mit - bezogen auf eine Verschlußachse (S) radial außen liegenden - Abstützbereichen eine axiale Abstützung des Verschlusses (2) im Mediumkanal und eine Übertragung des Mediumdruckes vom Verschluß auf den Mediumkanal bewirkt,
wobei das Abstützelement besteht
aus wenigstens zwei Tragstücken (8, 8a), die jeweils mit einem sich in Richtung der Verschlußachse (S) erstreckenden ersten Segment (10, 10a) und mit einem sich radial zur Verschlußachse (S) erstreckenden zweiten Segmente (9, 9a) ausgebildet sind und die mit den zweiten Segmenten (9, 9a) die Abstützbereiche des Abstützelementes bilden, und
aus einem zumindest teilweise an einer drucklosen Seite des Verschlusses vorgesehenen Verriegelungsstück (11), von welchem die Tragstücke (8, 8a) mit ihren zweiten Segmenten (9, 9a) radial wegstehen und an welchem sich die Tragstücke (8, 8a) mit ihren ersten Segmenten (10, 10a) zur Aufrechterhaltung des geschlossenen Zustandes des Verschlusses gegen solche Kräfte und/oder Momente abstützen, die aus der Abstützung der Tragstücke (8, 8a) am Mediumkanal resultieren,
wobei das Verriegelungsstück (11) von den Tragstücken (8, 8a) zur Aufhebung der Abstützung der Tragstücke (8, 8a) am Verriegelungsstück und am Mediumkanal und damit zum Öffnen des Verschlusses in Richtung der Verschlußachse (S) wegbewegbar ist, **dadurch gekennzeichnet**, daß die als Winkel- oder Kegelstück ausgeführten Tragstücke (8, 8a) jeweils mit ihrem ersten Segment (10, 10a) über das Verriegelungsstück (11) derart von einander lösbar miteinander zu dem Abstützelement verbunden sind,
daß sich der Verschluß durch Abziehen des Verriegelungsstückes (11) von den Tragstücken (8, 8a) durch Kollabieren des Abstützelementes öffnet.

2. Verschluß nach Anspruch 1, dadurch gekennzeichnet, daß das Verriegelungsstück (11) zumindest teilweise von den den Mediumdruck aufnehmenden Verschlußelementen (8, 8a) abziehbar ist.

3. Verschluß nach Anspruch 1, dadurch gekennzeichnet, daß das Verriegelungsstück (11) vollständig von den Verschlußelementen (8, 8a) abziehbar ist.

4. Verschluß nach einem der Ansprüche 1 - 3, dadurch gekennzeichnet, daß die Tragstücke (8, 8a) mit dem Verriegelungsstück (11) zur Übertragung solcher Kräfte auf das Verriegelungsstück (11) verbunden sind, die radial zur Achse (S) des Verschlußes wirken.

5. Verschluß nach einem der Ansprüche 1- 4, dadurch gekennzeichnet, daß das Verriegelungsstück (11) für jedes Tragstück (8, 8a) wenigstens zwei Anlage- oder Abstützbereiche (13, 14) bildet, von denen ein erster Bereich (13) zur Aufnahme von radial nach innen wirkenden Kräften und ein zweiter Bereich (14) zur Aufnahme von radial nach außen wirkenden Kräften dient.

6. Verschluß nach einem der Ansprüche 1 - 5, dadurch gekennzeichnet, daß an dem der Druckseite des Verschlußes abgewandten Ende des Verriegelungsstücks (11) ein Zugelement (4) befestigt ist, welches sich innerhalb eines drucklosen Teils (1') des Mediumkanals bis an einen dem Verschlußbereich (3) räumlich entfernten Bereich erstreckt, an dem der drucklose Teil (1') vorzugsweise durch eine Verschlußkappe (34) verschlossen ist.

7. Verschluß nach Anspruch 6, dadurch gekennzeichnet, daß an dem der Druckseite des Verschlußes abgewandten Ende des Verriegelungsstücks (11) von diesem ein stangenartiger Ansatz (20) wegsteht, dessen freies Ende mit einem Zugseil, einer Zugkette oder dergl. Zugelement verbindbar ist.

8. Verschluß nach einem der Ansprüche 1 - 7, dadurch gekennzeichnet, daß die Tragstücke sich mit ihrem ersten Ansatz oder Segment (10, 10a) jeweils mit einer der Verschlußachse (S) zugewandten Seite an einem radial innenliegenden ersten Anlagebereich (13) und mit einer radial außenliegenden Seite an einem zweiten, radial außenliegenden Anlagebereich (14) des Verriegelungsstücks (11) abstützen.

9. Verschluß nach einem der Ansprüche 1 - 8, dadurch gekennzeichnet, daß die Tragstücke (8, 8a) Teil eines den Querschnitt des Mediumkanals (1) verschließenden plattenförmigen Verschlußelementes sind.

10. Verschluß nach einem der Ansprüche 1 - 8, dadurch gekennzeichnet, daß sich an den Tragstücken (8, 8a) wenigstens ein den Querschnitt des Mediumkanals (1) abschließendes plattenförmiges Verschlußelement (5) abstützt.

11. Verschluß nach Anspruch 9 oder 10, dadurch gekennzeichnet, daß das plattenförmige Verschlußelement mit Sollbruchstellen versehen ist oder aus mehreren segmentartigen Teilen (36) besteht, die durch wenigstens eine verbindende Schicht (37) zusammengehalten sind.

12. Verschluß nach einem der Ansprüche 1 - 11, dadurch gekennzeichnet, daß am Verriegelungsstück (11) in Richtung der Verschlußachse (S) um einen vorgegebenen Betrag verschiebbar ein Bolzen (15) vorgesehen ist, der mit einem Bolzenkopf (15') durch wenigstens ein Federelement (19) vorgespannt gegen die Druckseite des Verschlußes anliegt und hierdurch insbesondere das Verriegelungsstück (11) und die Tragstücke (8, 8a) für die Montage bzw. den Einbau des Verschlußes zusammenhält.

13. Verschluß nach einem der Ansprüche 1 - 12, dadurch gekennzeichnet, daß die Tragstücke (8, 8a) eine schräge Abstützfläche (30) bilden, mit der sich die Tragstücke am Mediumkanal abstützen und die mit der Verschlußachse (S) einen Winkel kleiner als 90° einschließt, der sich zur Druckseite des Verschlußes hin öffnet.

14. Verschluß nach einem der Ansprüche 1 - 13, dadurch gekennzeichnet, daß die Tragstücke (8) an ihren radial außenliegenden Enden der zweiten Segmente (9a) an der der Druckseite des Verschlußes zugewandten Seite jeweils eine Abschrägung (32) aufweisen.

15. Verschluß nach einem der Ansprüche 1 - 14, dadurch gekennzeichnet, daß die Tragstücke (8, 8a) und/oder das Verriegelungsstück (11) und/oder das Verschlußelement (5) Guß- oder Formteile aus Kunststoff oder Metall sind.

## Claims

1. Closure for closing a medium channel of a pressure pipe system for a pressurised gaseous or liquid medium at a closure area (3), in particular for closing a medium channel of a conduit system for the drinking water supply at the closure area (3), with a support element which, with support areas lying radially outside in relation to a closure axis, effect an axial support of the closure (2) in the medium channel and a transfer of the medium pressure from the closure to the medium channel,
whereby the support element comprises
at least two carrier pieces (8, 8a) which are respectively designed with first segment (10, 10a) extending in the direction of the closure axis (S) and with a second segment (9, 9a) extending radially to the closure axis, and which - together with the second segments (9, 9a) - form the support areas of the support element, and
a locking piece (11) which is provided at least in part on the pressure-less side of the closure, and from which the carrier pieces (8, 8a) stand off radially with their second segments (9, 9a), and on which the carrier pieces (8, 8a) rest with their first segments (10. 10a) in order to maintain the closed state of the closure against such forces and/or torques which result from the carrier pieces (8, 8a) being supported on the medium channel,
whereby the locking piece (11) can be moved away from the carrier pieces (8, 8a) in order to release the support of the carrier pieces (8, 8a) on the locking piece and on the medium channel, and thus to open the closure in the direction of the closure axis (s),
**characterised in that**
the carrier pieces (8, 8a) designed as angled pieces or tapered pieces are - with their first segment (10, 10a) in each case - connected with one another to the support element via the locking piece (11), such that they can be detached from one another again, in such a way that the closure opens by pulling off the locking piece (11) from the carrier pieces (8, 8a), through the collapse of the support element.

2. Closure in accordance with claim 1, characterised in that the locking piece (11) can at least partially be removed from the closure elements (8, 8a) which take the medium pressure.

3. Closure in accordance with claim 1, characterised in that the locking piece (11) can be fully removed from the closure elements (8, 8a).

4. Closure in accordance with one of the claims 1-3, characterised in that the carrier pieces (8, 8a) are connected with the locking piece (11) for the transfer of such forces to the locking piece (11) which act radially to the axis (S) of the closure.

5. Closure in accordance with one of the claims 1-4, characterised in that for each carrier piece (8, 8a), the locking piece (11) forms at least two resting or support areas (13, 14), of which a first area (13) serves to receive forces which act radially inwards, and a second area (14) serves to receive forces acting radially outwards.

6. Closure in accordance with one of the claims 1-5, characterised in that fixed on the end of the locking piece (11) facing away from the pressure side of the closure is a pull element (4) which extends within a pressure-less part (1') of the medium channel up to an area which is spatially distant from the closure area (3) and at which the pressure-less part (1') is closed, preferably through a closure cap (34).

7. Closure in accordance with claim 6, characterised in that at the end of the locking piece (11) facing away from the pressure side of the closure, there is a rod-like projection (20) extending away, whose free end can be connected to a pull rope, a pull chain or similar pull element.

8. Closure in accordance with one of the claims 1 - 7, characterised in that carrier pieces rest with their first projection or segment (10, 10a), respectively with one side facing the closure axis, on a radially inner first resting area (13), and [rest] with a radially outer side on a second, radially outer resting area (14) of the locking piece (11).

9. Closure in accordance with one of the claims 1-8, characterised in that the carrier pieces (8. 8a) are part of a plate-shaped closure element which closes the cross section of the medium channel (1).

10. Closure in accordance with one of the claims 1-8, characterised in that at least one plate-shaped closure element (5) which closes the cross section of the medium channel (1) rests on the carrier pieces (8, 8a).

11. Closure in accordance with claim 9 or 10, characterised in that the plate-shaped closure element is equipped with predetermined breaking points, or consists of several segment-like parts (36), which are held together by at least one connecting layer (37).

12. Closure in accordance with one of the claims 1-11, characterised in that, provided on the locking piece (11), is a bolt (15) which can be pushed in the direction of the closure axis (S) by a given amount, which with a bolt head (15'), tensioned by at least one spring element (19), rests against the pressure side of the closure and which thus in particular holds the locking piece (11) and the carrier pieces (8, 8a) together for the assembly or installation of the closure.

13. Closure in accordance with one of the claims 1-12, characterised in that the carrier pieces (8, 8a) form an oblique resting area (30) with which the carrier pieces rest on the medium channel and which with the closure axis (S) forms an angle of less than 90°, which opens towards the pressure side of the closure.

14. Closure in accordance with one of the claims 1-13, characterised in that the carrier pieces (8, 8a) have, in each case, a bevel (32) on their radially outer ends of the second segment (9a) on the side facing the pressure side of the closure.

15. Closure in accordance with one of the claims 1-14, characterised in that the carrier pieces (8, 8a) and/or the locking piece (11) and/or the closure element (5) are cast or moulded parts made of plastic or metal.

## Revendications

1. Obturateur d'un canal d'écoulement de fluide dans un système de canalisations sous pression pour un fluide gazeux ou liquide sous pression au niveau d'une zone d'obturation (3), plus particulièrement obturateur d'un canal d'écoulement de fluide dans un système de canalisations pour l'approvisionnement en eau potable au niveau de la zone d'obturation (3), constitué d'un élément d'appui qui, grâce à des zones d'appui disposées radialement à l'extérieur par rapport à un axe d'obturation (S), forme un appui axial de l'obturateur (2) dans le canal d'écoulement de fluide et permet un transfert de la pression du fluide de l'obturation au canal d'écoulement de fluide,
l'élément d'appui étant constitué
d'au moins deux pièces de support (8, 8a) formées respectivement d'un premier segment (10, 10a) s'étendant dans la direction de l'axe d'obturation (S) et d'un deuxième segment (9, 9a) s'étendant radialement par rapport à l'axe d'obturation (S) et dont les deuxièmes segments (9, 9a) constituent les zones d'appui de l'élément d'appui,
et d'une pièce de verrouillage (11) prévue au moins partiellement sur le côté sans pression de l'obturateur et d'où s'écartent radialement les pièces de support (8, 8a) par leurs deuxièmes segments (9, 9a) et sur laquelle les pièces de support (8, 8a) reposent par leurs premiers segments (10, 10a) en vue de maintenir l'obturateur à l'état fermé face à des forces et/ou moments qui résultent de l'appui des pièces de support (8, 8a) sur le canal d'écoulement de fluide,
la pièce de verrouillage (11) pouvant être écartée des pièces de support (8, 8a) afin de neutraliser l'appui des pièces de support (8, 8a) sur la pièce de verrouillage et sur le canal d'écoulement de fluide et d'ouvrir ainsi l'obturateur dans la direction de l'axe d'obturation (S),
**caractérisé en ce que** les pièces de support (8, 8a) conçues comme des pièces coudées ou coniques sont, par leur premier segment respectif (10, 10a), reliées conjointement à l'élément d'appui par l'intermédiaire de la pièce de verrouillage (11) et ce avec possibilité d'être détachées l'une de l'autre,
en ce que l'obturateur s'ouvre en retirant la pièce de verrouillage (11) des pièces de support (8, 8a) avec collaboration de l'élément d'appui.

2. Obturateur suivant la revendication 1, caractérisé en ce que la pièce de verrouillage (11) peut être retirée au moins partiellement des éléments d'obturation (8, 8a) recevant le pression du fluide.

3. Obturateur suivant la revendication 1, caractérisé en ce que la pièce de verrouillage (11) peut être retirée complètement des éléments d'obturation (8, 8a).

4. Obturateur suivant l'une quelconque des revendications 1 à 3, caractérisé en ce que les pièces de support (8, 8a) sont reliées à l'élément de verrouillage (11) pour le transfert de forces, agissant radialement par rapport à l'axe (S) de l'obturateur, à la pièce de verrouillage (11).

5. Obturateur suivant l'une quelconque des revendications 1 à 4, caractérisé en ce que la pièce de verrouillage (11) pour chaque pièce de support (8, 8a) forme au moins deux zones d'appui ou de support (13, 14), dont une première zone (13) sert à recevoir des forces agissant radialement vers l'intérieur et dont une deuxième zone (14) sert à recevoir des forces agissant radialement vers l'extérieur.

6. Obturateur suivant l'une quelconque des revendications 1 à 5, caractérisé en ce que au niveau de l'extrémité de la pièce de verrouillage (11) opposée au côté sous pression de l'obturateur est fixé un élément de traction (4) qui s'étend à l'intérieur d'un tronçon (1') sans pression du canal d'écoulement de fluide jusqu'à une zone éloignée de la zone d'obturation (3), au niveau de laquelle le tronçon sans pression (1') est fermé de préférence par un couvercle (34).

7. Obturateur suivant la revendication 6, caractérisé en ce que au niveau de l'extrémité de la pièce de verrouillage (11) opposée au côté sous pression de l'obturateur, une pièce en forme de tige (20) fait saillie de la pièce de verrouillage, son extrémité libre pouvant être reliée à un câble de traction, une chaîne de traction ou autre élément de traction du même genre.

8. Obturateur suivant l'une quelconque des revendications 1 à 7, caractérisé en ce que les pièces de support prennent appui par leur première saillie ou leur premier segment (10, 10a), respectivement par un côté tourné vers l'axe d'obturation (S), sur une première zone (13) d'appui radiale interne, et par un côté radial externe sur une deuxième zone d'appui (14) radiale externe de la pièce de verrouillage (11).

9. Obturateur suivant l'une quelconque des revendications 1 à 8, caractérisé en ce que les pièces de support (8, 8a) constituent une partie d'un élément de verrouillage en forme de plaque fermant la section transversale du canal d'écoulement de fluide (1).

10. Obturateur suivant l'une quelconque des revendications 1 à 8, caractérisé en ce qu'au moins un élément d'obturation (5) en forme de plaque fermant la section transversale du canal d'écoulement de fluide (1) prend appui sur les pièces de support (8, 8a).

11. Obturateur suivant la revendication 9 ou 10, caractérisé en ce que l'élément d'obturation en forme de plaque est pourvu de points de rupture ou est composé de plusieurs segments (36) maintenus ensemble par une couche de liaison (37).

12. Obturateur suivant l'une quelconque des revendications 1 à 11, caractérisé en ce que au niveau de la pièce de verrouillage (11), dans la direction de l'axe d'obturation (S), est prévu un boulon (15) pouvant être déplacé sur une distance prédéterminée et dont la tête (15'), sollicitée par au moins un élément de ressort (19), repose contre le côté sous pression de l'obturateur, de manière à maintenir assemblées en particulier la pièce de verrouillage (11) et les pièces de support (8, 8a) pour le montage, respectivement l'installation de l'obturateur.

13. Obturateur suivant l'une quelconque des revendications 1 à 12, caractérisé en ce que les pièces de support (8, 8a) forment une surface d'appui (30) inclinée grâce à laquelle elles prennent appui sur le canal d'écoulement de fluide et qui forme, avec l'axe d'obturation (S), un angle inférieur à 90° s'ouvrant en direction du côté sous pression de l'obturateur.

14. Obturateur suivant l'une quelconque des revendications 1 à 13, caractérisé en ce que les pièces de support (8) présentent respectivement, au niveau de leurs extrémités radiales extérieures des deuxièmes segments (9a), du côté tourné vers le côté sous pression de l'obturateur, un chanfrein (32).

15. Obturateur suivant l'une quelconque des revendications 1 à 14, caractérisé en ce que les pièces de support (8, 8a) et/ou la pièce de verrouillage (11) et/ou l'élément d'obturation (5) sont des pièces venues de moulage en matière plastique ou en métal.
